# EUROPÄISCHE PATENTSCHRIFT

(11) **EP 1 852 637 B1**
(45) Veröffentlichungstag und Bekanntmachung des Hinweises auf die Patenterteilung: **18.07.2012**
(21) Anmeldenummer: 07106473.7
(22) Anmeldetag: 19.04.2007
(51) Int. Cl.: F16J 15/02, B01D 46/00

(54) **Filter mit einem radialen Dichtungssystem**
Filter with a radial sealing system
Filtre avec un système d'étanchéification radiale

(30) Priorität: 01.05.2006 US 796153 P
(43) Veröffentlichungstag der Anmeldung: 07.11.2007
(73) Patentinhaber: MANN+HUMMEL GmbH, 71638 Ludwigsburg (DE)
(72) Erfinder: Miller, Stuart, Kalamazoo, MI 49009 (US)

(56) Entgegenhaltungen:
- GB-A- 2 293 335
- US-A1- 2005 060 972

## Beschreibung

### Technisches Gebiet

Die Erfindung betrifft einen verbesserten Luftfilter für einen Verbrennungsmotor. Der Luftfilter beinhaltet ein Filtergehäuse mit einem darin befindlichen Filterelement. Insbesondere betrifft die Erfindung einen Luftilter mit einem radialen Dichtungssystem für die Bildung einer Dichtung zwischen dem Filtergehäuse und dem Filterelement.

### Stand der Technik

Während des Betriebs eines Verbrennungsmotors ist es wünschenswert, Fremdkörper aus der Luftansaugung des Motors zu entfernen, um so Motorschaden und den daraus resultierenden Leistungsabfall zu verringern, der durch das Ansaugen durch den Motor von Partikeln und Fremdkörpern entstehen kann. Folglich wurde eine Vielfalt an Luftfiltersystemen zum Filtern der vom Motor angesaugten Luft entwickelt.

Viele konventionelle Luftfiltersysteme beinhalten ein Filterelement, das sich in einem Filtergehäuse befindet, sowie eine zwischen dem Filterelement und dem Gehäuse angebrachte Dichtung. In vielen dieser Systeme ist die Dichtung allerdings in dem Filterelement integriert und wird deshalb jedes Mal, wenn das Filterelement ausgetauscht wird, entsorgt. Außerdem kann die Dichtung in vielen dieser Systeme den durch das Filterelement geleiteten Luftstrom beeinträchtigen, was negative Auswirkungen auf den Motorbetrieb haben kann. Und weil in vielen dieser konventionellen radialen Dichtungssysteme eine enorme Kraft benötigt wird, um eine widerstandfähige Dichtung zu brechen, kann ein Austausch und/oder eine Wartung des Filterelementes schwierig sein. Beispielsweise zeigt die GB 2 293 335 A einen Luftfilter mit einem radialen Dichtungssystem. Der Luftfilter umfasst ein rohrförmiges Filterelement, welches von der zu reinigende Luft in einer Richtung von radial außen nach radial innen durchströmt wird. Das Dichtungssystem bewirkt eine radiale Dichtung zwischen dem rohrförmigen Filterelement und einem rohrförmigen Vorsprung, welcher in den Innenhohlraum des Filterelementes ragt. Zur radialen Dichtung ist der Vorsprung mit einem Dichtungsring versehen, der wiederum eine radial nach außen gerichtete Dichtungslippe aufweist, die an einer nach radial innen gerichteten Dichtungsoberfläche des Filterelementes anliegt.
Dahingegen ist der US2005/0060972 A1 ein gattungsgemäßer Luftfilter mit den Merkmalen des Oberbegriffs von Anspruch 1 zu entnehmen, welcher insbesondere ein Filterelement aufweist, das eine erste Strömungsfläche an einem Einlassende und eine zweite Strömungsfläche an einem Auslassende aufweist. Im Stand der Technik trägt ein an der Umfangsoberfläche des Filterelementes befestigter Rahmen einen Dichtungsring, der eine radial nach außen gerichtete Dichtungsoberfläche aufweist, welche an einer radial nach innen gerichteten Dichtungsoberfläche eines Filtergehäuses dichtend anliegt.

Ausgehend von dem Luftfilter gemäß der US2005/0060972 A1 wäre es von Vorteil, ein radiales Dichtungssystem für den Luftfilter eines Verbrennungsmotors herzustellen, das einfach eingebaut und herausgenommen werden kann und das eine wirksame und kostengünstige Alternative zu den vorhandenen Dichtungssystemen ist.

### Offenbarung der Erfindung

Ziel dieser Erfindung ist die Bereitstellung einer radialen Dichtung, die mit den vorhandenen Luftfiltersystemen kompatibel ist.

Ein anderes Ziel dieser Erfindung ist die Bereitstellung eines Luftfilters, der einen Luftmassensensor mit einem verbesserten Signal beinhaltet.

Ein weiteres Ziel der Erfindung ist die Bereitstellung eines Luftfilters mit verbesserten Wartungseigenschaften.

Diese und weitere Ziele werden in Übereinstimmung mit der vorliegenden Erfindung durch die Bereitstellung eines Luftfilters nach Anspruch 1 realisiert. Der Luftfilter mit einem radialen Dichtungssystem beinhaltet ein Filtergehäuse, ein Filterelement und einen Dichtungsring. Das Filtergehäuse begrenzt eine Filteraufnahmekammer mit einer ringförmigen Dichtungsfläche. Das Filterelement wird in die Filteraufnahmekammer eingepasst, an das ein ringförmiges Dichtungsband befestigt ist, das eine innere ringförmige Dichtungsfläche hat. Der Dichtungsring beinhaltet einen Stützring und eine Lippendichtung. Gemäß einer Ausführungsform ist die Lippendichtung über den Stützring gepresst. Der Dichtungsring ist so ausgelegt, dass er eine Dichtung zwischen dem Filtergehäuse und dem Dichtungsband des Filterelementes bildet.

Gemäß einer Ausführungsform ist ein ringförmiger Kanal, der zwischen einer äußeren umlaufenden Oberfläche des Filterelementes und einer inneren Oberfläche des Filtergehäuses gebildet ist, kleiner als ca. 2% des Durchmessers des Filterelementes. Gemäß einer weiteren Ausführungsform hat der Dichtungsring ein radiales Profil, das kleiner als 10% ist.

Vorzugsweise wird der Dichtungsring axial durch die innere ringförmige Dichtungsfläche des Filtergehäuses gestützt. Die Lippendichtung kann eine erste Lippe und eine zweite Lippe beinhalten, von denen jede auf einer äußeren umlaufenden Oberfläche des Dichtungsringes angeordnet ist, und zwar derart, dass die erste Lippe eine Dichtung mit der inneren ringförmigen Dichtungsfläche des Filtergehäuses bildet und die zweite Lippe eine Dichtung mit der inneren ringförmigen Dichtungsfläche des Dichtungsbandes bildet. Alternativ können der Stützring und das Gehäuse aus einem Teil bestehen, und zwar derart, dass die Lippendichtung eine einzige Lippe beinhaltet, die dazu ausgelegt ist, eine Dichtung mit der inneren ringförmigen Dichtungsfläche nur des Dichtungsbandes zu bilden.

Gemäß einer weiteren Ausführungsform sind die erste Lippe und die zweite Lippe in Bezug auf eine Achsrichtung des Dichtungsringes nach innen geneigt. Jede Lippe bildet vorzugsweise einen Winkel zwischen 30° und 60° in Bezug auf ihre jeweilige Auflagefläche.

### Kurze Beschreibung der Zeichnungen

Die Erfindung wird im Folgenden detaillierter mit Bezug zu erklärenden bevorzugten Ausführungsformen beschrieben, die in den begleitenden Zeichnungen gezeigt werden, in denen:

Abb. 1 eine schematische Darstellung eines Luftfilters zeigt, der ein Filtergehäuse, ein Filterelement und einen Dichtungsring zwischen dem Filtergehäuse und dem Filterelement beinhaltet.

Abb. 2 eine Detailansicht des Dichtungsringes von Abb. 1 zeigt.

Abb. 3 eine perspektivische Ansicht eines Filterelementes und ein befestigtes Dichtungsband zeigt.

Abb. 4a den Querschnitt einer schematischen Darstellung eines zusammengebauten doppelten Lippendichtungsringes zeigt.

Abb. 4b eine perspektivische Ansicht eines zusammengebauten doppelten Lippendichtungsringes wie in Abb. 4a zeigt.

Abb. 5a den Querschnitt einer schematischen Darstellung eines teilweise zusammengebauten radialen Dichtungssystems zeigt.

Abb. 5b eine perspektivische Ansicht eines teilweise zusammengebauten radialen Dichtungssystems wie in Abb. 5a zeigt. Ausführungsform(en) der Erfindung

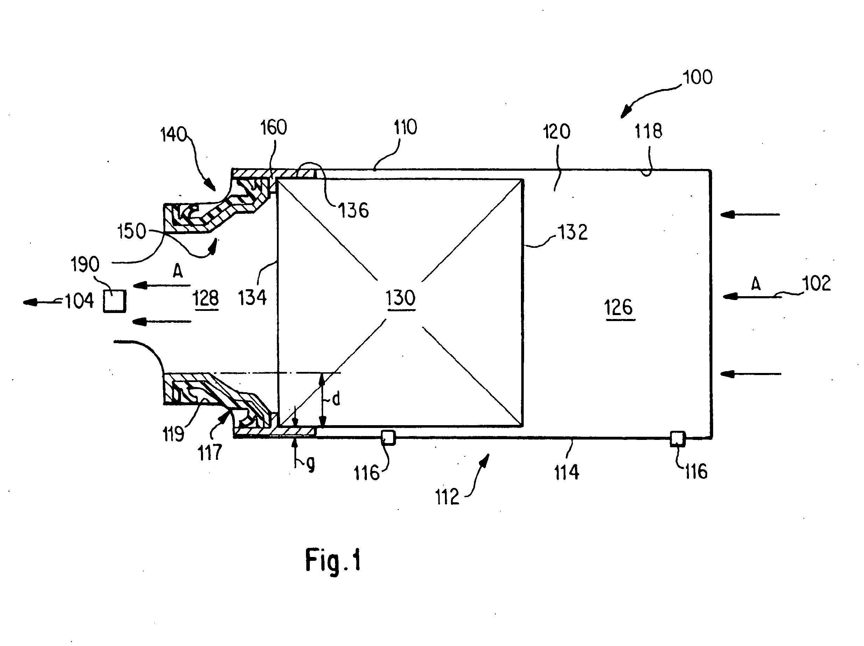

Bezug nehmend auf Abb. 1 ist der Luftfilter 100 im Luftansaugtrakt eines Verbrennungsmotors angeordnet und beinhaltet ein Filtergehäuse 110, das eine Filteraufnahmekammer 120 begrenzt, in welche das Filterelement 130 eingeführt wird. Die Richtung des Luftstroms während des Betriebs des Verbrennungsmotors verläuft von einer vorgelagerten Seite 102 zu einer nachgelagerten Seite 104 des Luftfilters in Richtung einer Längsachse des Filterelementes, wie dies durch die Pfeile (A) in Abb. 1 angezeigt wird.

Das Filterelement 130 beinhaltet einen im Wesentlichen zylindrischen Querschnitt mit einer ersten Strömungsfläche 132 an einem Einlassende und eine zweite Strömungsfläche 134 an einem Auslassende. Ein Filterelement beinhaltet eine axial gewickelte Schicht oder gebündelte Schichten von Filtermedien wie eine oder mehrere Schichten Wellpappe mit einer Vielzahl an Wellen. Wie erklärt, passt das Filterelement 130 in die Aufnahmekammer 120, welche einen ähnlichen zylindrischen Querschnitt hat. Aber sowohl die Aufnahmekammer 120 als auch das Filterelement 130 können einen nicht kreisförmigen (z. B. ovalen) Querschnitt haben.

Wie bereits erklärt, beinhaltet das Filtergehäuse 110 eine in einer Seitenwand gebildete Öffnung 112 und eine Gehäuseabdeckung 114, die fest an dem Gehäuse mittels Befestigungselementen 116 befestigt ist. Bei einer derartigen Konfiguration kann das Filterelement 130 über die Öffnung 112 in die Aufnahmekammer 120 eingeführt oder daraus entnommen werden.

Wenn das Filterelement 130 in die Aufnahmekammer 120 über eine Öffnung in der Seitenwand eingeführt wird, beinhaltet das Einführen des Filterelementes zwei Schritte, zu denen die seitliche Einführung des Filterelementes durch die Öffnung und danach die axiale Verschiebung des Filterelementes in Abwärtsrichtung gehören, um so eine widerstandsfähige Dichtung zwischen dem Filterelement 130 und dem Dichtungsring 150 zu bilden. In ähnlicher Weise beinhaltet das Herausnehmen des Filterelementes zuerst eine axiale Verschiebung des Filterelementes in Aufwärtsrichtung, um so die widerstandsfähige Dichtung zwischen dem Filterelement 130 und dem Dichtungsring 150 zu brechen, um dann das Filterelement aus dem Filtergehäuse über die Öffnung zu entnehmen.

An einer vorgelagerten Seite des Filtergehäuses 110 ist ein Zwischenraum 126 in der Aufnahmekammer 120 gebildet, der verwendet werden kann, um eine axiale Verschiebung des Filterelementes 130 während des Einführens in und des Herausnehmens aus der Aufnahmekammer 120 zu ermöglichen.

Anstatt die Seitenwand mit einer Öffnung zu versehen, kann eine Öffnung zum Einführen und Herausnehmen des Filterelementes 130 an dem axialen Ende (vorgelagertes Ende) des Filtergehäuses angebracht werden, so dass das Filterelement in die Aufnahmekammer mittels einer axialen Verschiebung eingeführt werden kann, um sowohl das Einführen (Herausnehmen) des Filterelementes und das Brechen der widerstandsfähigen Dichtung auszuführen.

Ein bevorzugter Luftfilter 100 beinhaltet eine Inline-Strömungsgeometrie, wobei ungefilterte Luft in das Filtergehäuse in eine Richtung eintritt und - nachdem sie durch das Filterelement 130 geströmt ist - gefilterte Luft das Filtergehäuse im Wesentlichen in der gleichen Richtung verlässt. Das Filterelement ist dafür ausgelegt, Feinstaub und Fremdkörper aus der durch den Luftfilter strömenden Luft herauszufiltern.

Die Aufnahmekammer 120 hat einen kreisrunden Querschnitt, der einen ersten Durchmesser und eine erste axiale Länge hat. Ein Plenumvolumen 128 ist an der nachgelagerten Seite der Aufnahmekammer 120 angeordnet und durch eine innere Oberfläche des Gehäuses 119 und eine zweite Strömungsfläche 134 begrenzt. Das Plenumvolumen begrenzt auch eine Dichtungskammer mit einer inneren Oberfläche 119. Die Dichtungskammer hat einen kreisrunden Querschnitt mit einem zweiten Durchmesser, der kleiner als der erste Durchmesser ist, und eine zweite axiale Länge, die kürzer als die erste axiale Länge ist. Demzufolge befindet sich ein Absatz 117 zwischen der Aufnahmekammer 120 und der Dichtungskammer. Die innere Oberfläche 119 der Dichtungskammer sorgt für eine starre kreisförmige Dichtungsoberfläche zur Bildung einer widerstandsfähigen Dichtung.

Der Luftfilter 100 beinhaltet weiterhin ein radiales Dichtungssystem 140, welches dafür ausgelegt ist, für eine gasundurchlässige Abdichtung zwischen dem Filterelement 130 und dem Filtergehäuse 110 zu sorgen. Gasundurchlässig bedeutet, dass während des Betriebs eines Verbrennungsmotors, welcher den Luftfilter 100 beinhaltet, das Dichtungssystem 140 den Gasstrom (d. h. den Luftstrom) im Wesentlichen daran hindert, zwischen dem Filterelement 130 und den inneren Oberflächen 118, 119 des Filtergehäuses 110 zu strömen. Insbesondere trennt ein Dichtungsring 150 die vorgelagerte ungefilterte Seite 126 der Aufnahmekammer von der nachgelagerten Reinluftseite 128.

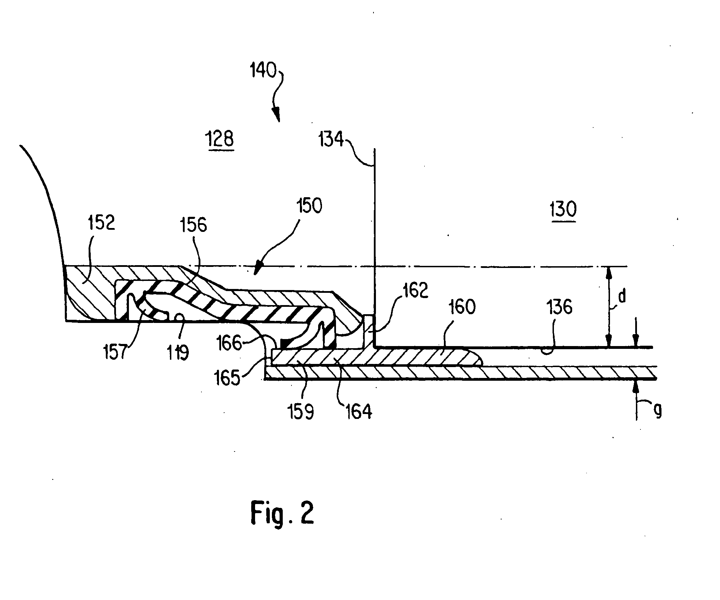

Das radiale Dichtungssystem, welches einen Dichtungsring und ein Filterelement mit einem daran befestigten Dichtungsband beinhaltet, wird jetzt unter Bezugnahme auf die Abb. 2-5 detailliert beschrieben.

Bezug nehmend zuerst auf Abb. 2, beinhaltet das radiale Dichtungssystem 140 ein Dichtungsband 160, welches dafür ausgelegt ist, gleitend über eine äußere umlaufende Oberfläche 136 des Filterelementes 130 zu passen und daran befestigt zu werden (z. B. mittels eines dauerhaften Harzes oder einem anderen Kleber). Ein bevorzugtes Dichtungsband hat eine Dicke von ca. 2 mm. Ein Filterelement mit einem daran befestigten Dichtungsband beinhaltet ein erstes Bauteil des radialen Dichtungssystems 140. Vorzugsweise beinhaltet dieses erste Bauteil ein zu entsorgendes Teil, welches vom Luftfilter entnommen und ersetzt werden kann.

Eine Vielzahl radial sich erstreckender angeordneter Fixierdorne 162, die am Dichtungsband 160 gebildet sind, hindern das Dichtungsband daran, vollständig über die äußere Oberfläche 136 zu rutschen. Das Dichtungsband beinhaltet ein axial sich erstreckendes Teil 164, welches, einmal zusammengebaut, eine innere ringförmige Dichtungsoberfläche 166 begrenzt, die so konfiguriert ist, dass sie mit einer flexiblen Lippe zusammenwirkt, um eine widerstandsfähige Dichtung zu bilden. Wenn das Filterelement 130 mit einem daran befestigten Dichtungsband 160 in die Aufnahmekammer 120 eingeführt wird, dann grenzt eine axiale Endfläche 165 des axial sich erstreckenden Teils 164 an eine Oberfläche des Absatzes, der zwischen der Aufnahmekammer 120 und der Dichtungskammer gebildet ist. Diese Angrenzung dient dazu, die innere Dichtungsfläche 166 mit einer dichtungsbildenden Lippe zu fluchten.

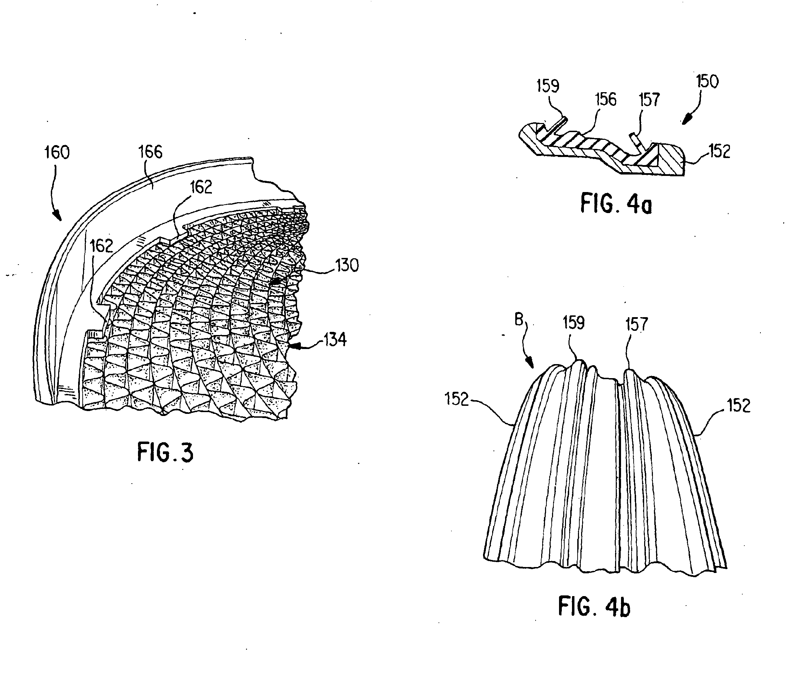

Eine perspektivische Abbildung eines Dichtungsbandes 160, das an einem Filterelement 130 befestigt ist, ist in Abb. 3 gezeigt. Ebenfalls gezeigt werden eine ringförmige Dichtungsfläche 166 und Fixierdorne 162. Die Fixierdorne erstrecken sich radial, um nur einen kleinen Bereich einer Strömungsfläche 134 abzudecken, um so nur minimal den gefilterten Luftstrom zu beeinträchtigen. Ein optionales zweites Band (nicht dargestellt), das als Kantenschutz dienen kann, kann an der gegenüberliegenden vorgelagerten Seite des Filterelementes befestigt werden.

Wieder Bezug nehmend auf Abb. 2, beinhaltet ein zweites Bauteil des radialen Dichtungssystems einen Dichtungsring 150, welcher einen Stützring 152 und eine geformte Lippendichtung 156 beinhaltet, die an einer äußeren umlaufenden Oberfläche des Dichtungsringes gebildet ist. Ein bevorzugter Dichtungsring hat eine Breite (in Achsrichtung) von ca. 30 mm und eine bevorzugte Lippendichtung hat eine Breite von ca. 23 mm. Die Lippendichtung 156 ist aus einem flexiblen Material gebildet und beinhaltet, gemäß einer Ausführungsform, eine erste Lippe 157 und eine zweite Lippe 159. Der Dichtungsring 150 ist so ausgelegt, dass er gleitend über die innere Oberfläche 119 des Filtergehäuses passt. Zusammengebaut berührt die erste Lippe 157 die innere Oberfläche 119 und bildet mit ihr eine widerstandsfähige Dichtung, und die zweite Lippe 159 berührt die Dichtungsfläche 166 des Dichtungsbandes 160 und bildet mit ihr eine widerstandsfähige Dichtung.

Vorzugsweise muss der Dichtungsring 150 nicht jedes Mal herausgenommen oder ausgetauscht werden, wenn das Filterelement 130 ausgetauscht wird. Dies kann die Kosten des radialen Dichtungssystems verringern, vor allem, weil das flexible Material, welches die Lippendichtung 156 bildet, den Dichtungsring zu einem relativ teuren Bauteil macht.

Der Stützring 152 ist so konfiguriert, dass er die Umfangsspannung in dem zusammengebauten und eingebauten Dichtungsring 150 kontrolliert ohne dabei wesentlich deformiert zu werden. Der Stützring 152 berührt die innere Oberfläche 119 des Filtergehäuses und wird von ihr radial gestützt. Im Gegensatz dazu - weil der Durchmesser des Stützringes 152 im Bereich des Dichtungsbandes 160 verringert ist - berührt der Stützring 152 nicht die Dichtungsfläche 166 des Dichtungsbandes.

Eine schematische Querschnittsansicht des Dichtungsringes 150 inklusive der ersten Lippe 157 und der zweiten Lippe 159 ist in Abb. 4a gezeigt. Die erste Lippe 157 ist so konfiguriert, dass sie eine innere Oberfläche des Gehäuses berührt und die zweite Lippe 159 ist so konfiguriert, dass sie eine innere Dichtungsfläche des Dichtungsbandes berührt. Eine perspektivische Ansicht dieses doppelten Lippendichtungsringes ist in Abb. 4b gezeigt. Wie ersichtlich, ist der Durchmesser des in der Nähe der zweiten Lippe 159 liegenden Stützringes (angedeutet durch Pfeil B) derart reduziert, dass der Stützring, wenn er zusammengebaut ist, die Dichtungsfläche 166 nicht direkt berührt.

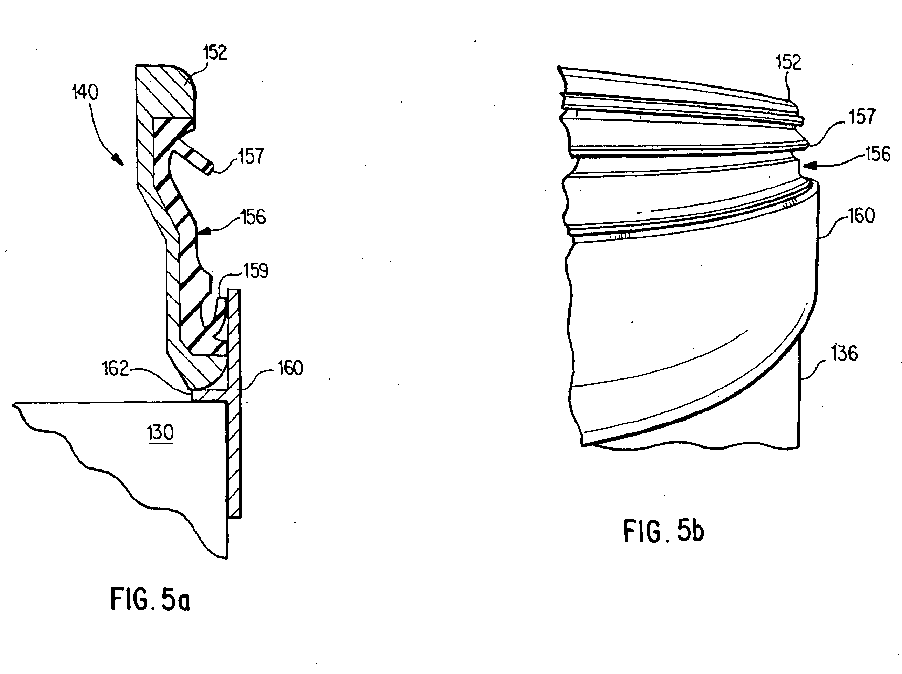

Abb. 5a zeigt eine schematische Querschnittsansicht eines teilweise zusammengebauten radialen Dichtungssystems 140. Eine entsprechende perspektivische Ansicht des teilweise zusammengebauten radialen Dichtungssystems ist in Abb. 5b gezeigt.

In den Abb. 5a-b ist das Dichtungsband 160 gezeigt, wie es am Filterelement 130 befestigt ist. Die erste Lippe 157, die so ausgelegt ist, dass sie die innere Oberfläche des Gehäuses berührt, ist radial sich erstreckend von der Lippendichtung 156 dargestellt. Gemäß einer bevorzugten Ausführungsform bildet jede Lippe 157, 159 einen Winkel in Bezug auf ihre jeweilige Auflagefläche von weniger als 60°, aber größer als 30° (vorzugsweise ca. 45°).

Ferner, wie in den Abb. 2-5 gezeigt, sind die Lippen 157, 159 zueinander angewinkelt (d. h. die nachgelagerte Lippe 157 ist in die vorgelagerte Richtung angewinkelt und die vorgelagerte Lippe 159 ist in die nachgelagerte Richtung angewinkelt). Mit einer derart angewinkelten Konfiguration wird eine zunehmend widerstandsfähige Dichtung zwischen jeder Lippe und ihrer jeweiligen Auflagefläche unter den Betriebsbedingungen eines Verbrennungsmotors gebildet. Das heißt, der relative Unterdruck, der in dem Plenumvolumen 128 während des Betriebs des Motors entsteht, verstärkt die Dichtung jeder Lippendichtung vorteilhaft, während der Motor läuft. Somit kompensiert das Design der Lippendichtung vorteilhaft Designtoleranzen zwischen unterschiedlichen Komponenten in der Luftfilteranordnung, erhöht die Dichtungsspannung während des Motorbetriebs und sorgt vorteilhaft für eine geringere Kraft beim Ein- und Ausbau in Bezug auf konventionelle Dichtungssysteme.

Gemäß einer Ausführungsform kann die oben beschriebene doppelte Lippendichtung durch eine einzelne Lippendichtung ersetzt werden. Bei dieser alternativen Ausführungsform ist die Stützringstruktur in dem Gehäuse derart integriert, dass der Stützring und das Gehäuse aus einem Teil bestehen. Eine Lippendichtung, die eine einzige Lippe beinhaltet, die ausgelegt ist, um eine Dichtung nur mit der inneren ringförmigen Dichtungsfläche 166 des Dichtungsbandes 160 zu bilden, kann gleitend über den integrierten Stützring eingepasst werden.

Wieder Bezug nehmend auf Abb. 1, beinhaltet ein bevorzugter Luftfilter 100 einen Luftmassenmesser 190 angeordnet in einem Filtergehäuse und dem Filterelement 130 nachgelagert. Das sich zwischen der Strömungsfläche 134 und dem Luftmassenmesser 190 befindende Plenumvolumen 128 reduziert erfolgreich vom Filterelement verursachte Mikroturbulenzen in der das Filterelement verlassenden Luft. Das Vorhandensein des Plenumvolumens zusammen mit anderen Aspekten des Designs des nachstehend beschriebenen radialen Dichtungssystems resultiert in einer besseren Signalqualität (z. B. Signal-Rausch-Verhältnis und Übertragungsfunktion) vom Luftmassenmesser.

Störungen des von der Strömungsfläche134 des Filterelementes 130 auftretenden Luftstroms können minimiert werden, indem das radiale Profil des Dichtungsringes 150 verkleinert wird. Das radiale Profil (2d) des Dichtungsringes 150 ist als die maximal vorspringende Überlappung des Dichtungsringes in Bezug auf das Filterelement 130 definiert. Eine Hälfte des gesamten radialen Profils (d) des Dichtungsringes 150 ist in den Abb. 1 und 2 dargestellt. Erstaunlicherweise ist das radiale Profil des Dichtungsringes 150 wesentlich kleiner als das in vielen konventionellen Dichtungssystemen gefundene radiale Profil. Gemäß einer Ausführungsform ist das radiale Profil (2d) kleiner als ca. 10%.

Die Betriebsleistung sowohl des Luftmassenmessers als auch des Motors kann verbessert werden, indem der Spalt (g) zwischen der äußeren umlaufenden Oberfläche des Filterelementes und der inneren Oberfläche 118 der Filteraufnahmekammer 120 verringert wird. Der Spalt (g) bietet eine Messgröße des Volumens der Filteraufnahmekammer, die nicht durch das Filterelement ausgefüllt ist.

Bei einem vorgegebenen Durchmesser der Filteraufnahmekammer ist der größte Durchmesser des Filterelementes durch den gesamten Spalt (2g) reduziert. Ein bevorzugtes Filterelement hat einen äußeren Durchmesser von ca. 225 mm und der gesamte Spalt (2g) beträgt vorzugsweise weniger als ca. 4%, und noch besser weniger als ca. 2% vom Durchmesser des Filterelementes.

Weil sowohl die tatsächliche Flächengeschwindigkeit der aus dem Filterelement austretenden Luft als auch der Druckverlust der Luft durch das Filterelement hindurch umgekehrt proportional zum Durchflussquerschnitt des Filterelementes sind, kann der Druckverlust durch ein Filterelement hindurch verringert werden, indem (g) verringert wird. Ein wirksamerer Filterbereich führt normalerweise zu einer effizienteren Luftzufuhr durch den Luftfilter zum Motor, was sich wiederum in einer höheren verfügbaren Leistung niederschlägt. Der Antragsteller hat ermittelt, dass das Plenumvolumen, das radiale Profil und der seitliche Spalt des radialen Dichtungssystems der Erfindung eine verbesserte Funktion sowohl des Luftmassensensors als auch des Motors zur Folge haben.

Weil das radiale Dichtungssystem der Erfindung mit konventionellen Luftfilterdichtungssystemen austauschbar ist, können Hersteller das radiale Dichtungssystem der Erfindung mit minimaler Anpassung an die Bauform aufrüsten.

Die doppelte (oder einzelne) Lippendichtung, die mittels jeder geeigneten formgebenden Methode wie Spritzguss oder Formpressen hergestellt werden kann, ist vorzugsweise aus einem flexiblen, elastomeren Material geformt. Materialien für die Lippendichtung sind beispielsweise Naturkautschuk, synthetischer Kautschuk, Polyurethan, Ethylen-Propylen-Elastomer (EPDM), Nitrilkautschuk (NBR), Santoprene^{™} Thermoplast, Kombinationen dieser Materialien und Verbundstoffe daraus.

Der Stützring und das ringförmige Dichtungsband, das mittels jeder formgebenden Methode wie Spritzguss hergestellt werden kann, werden vorzugsweise aus einem Kunstharz geformt. Materialien für den Stützring und das ringförmige Dichtungsband sind beispielsweise Polyurethan, Polypropylen, Nylon, Kombinationen dieser Materialien und Verbundstoffe daraus.

Die vorangehende Beschreibung und die Beispiele wurden lediglich dargelegt, um die Erfindung zu erläutern und sind nicht vorgesehen, einschränkend zu sein. Da Änderungen an den offenbarten Ausführungsformen, die die Substanz der Erfindung einbeziehen, von Fachleuten vorgenommen werden können, sollte die Erfindung weit ausgelegt werden, um sämtliche Variationen einzubeziehen, die sich auf den Anwendungsbereich der beigefügten Ansprüche und deren Entsprechung beziehen.

## Patentansprüche

1. Luftfilter (100), beinhaltend ein Filtergehäuse (110) und ein Filterelement (130), wobei das Filtergehäuse (110) eine Filteraufnahmekammer (120) mit einer ersten nach innen gerichteten ringförmigen Oberfläche (118), welche über einen ersten Durchmesser und eine erste axiale Länge verfügt, und eine Dichtungskammer mit einer zweiten nach innen gerichteten Oberfläche (119), welche über einen zweiten Durchmesser und eine zweite axiale Länge verfügt, begrenzt, wobei der zweite Durchmesser kleiner ist, als der erste Durchmesser und die zweite axiale Länge kürzer ist, die erste axiale Länge; wobei das Filterelement (130) über eine axial gewickelte Schicht oder gebündelte Schichten von Filtermedien verfügt und eine erste Strömungsfläche (132) an einem Einlassende und eine zweite Strömungsfläche (134) an einem Auslassende aufweist, wobei das Filterelement (130) über eine nach außen gerichtete umlaufende Oberfläche (136) verfügt, wobei das Filterelement (130) in die Filteraufnahmekammer (120) eingepasst ist und an der nach außen gerichteten umlaufenden Oberfläche (136) des Filterelements (130) ein ringförmiges Dichtungsband (160) befestigt ist, **dadurch gekennzeichnet, dass** das Dichtungsband (160) über eine nach innen gerichtete ringförmige Dichtungsoberfläche (166) verfügt und dass ein Dichtungsring (150) vorgesehen ist, der einen Stützring (152) und eine Lippendichtung (156) beinhaltet, wobei der Dichtungsring (150) so ausgelegt ist, dass er eine Dichtung zwischen der zweiten nach innen gerichteten Oberfläche (119) des Filtergehäuses (110) und der nach innen gerichteten ringförmigen Dichtungsoberfläche (166) des Dichtungsbandes (160) bildet.

2. Luftfilter (100) nach Anspruch 1, **dadurch gekennzeichnet, dass** das ringförmige Dichtungsband (160) so ausgelegt ist, dass es gleitend über die nach außen gerichtete umlaufende Oberfläche (136) des Filterelementes (130) passt.

3. Luftfilter (100) nach Anspruch 1 oder 2, **dadurch gekennzeichnet, dass** das ringförmige Dichtungsband (160) eine Vielzahl radial sich erstreckender Fixierdorne (162) beinhaltet, die an der nach innen gerichteten umlaufenden Oberfläche (166) angeformt sind.

4. Luftfilter (100) nach einem der vorangehenden Ansprüche, **dadurch gekennzeichnet, dass** ein zwischen der nach außen gerichteten umlaufenden Oberfläche (136) des Filterelementes (130) und der nach innen gerichteten Oberfläche (118) des Filtergehäuses (110) gebildeter ringförmiger Spalt (g) kleiner als ca. 2% eines Durchmessers des Filterelementes (130) ist.

5. Luftfilter (100) nach einem der vorangehenden Ansprüche, **dadurch gekennzeichnet, dass** der Dichtungsring (150) ein radiales Profil (2d) kleiner als ca. 10% eines Durchmessers des Filterelements (130) aufweist.

6. Luftfilter (100) nach einem der vorangehenden Ansprüche, **dadurch gekennzeichnet**, die Lippendichtung (156) eine erste Lippe (157) und eine zweite Lippe (159) beinhaltet, wobei die erste Lippe (157) so ausgelegt ist, dass sie eine Dichtung mit der zweiten nach innen gerichteten ringförmigen Oberfläche (119) des Filtergehäuses (110) bildet und die zweite Lippe (159) so ausgebildet ist, dass sie eine Dichtung mit der nach innen gerichteten ringförmigen Dichtungsoberfläche (166) des Dichtungsbandes (160) bildet.

7. Luftfilter (100) nach einem Ansprüche 1 bis 5, **dadurch gekennzeichnet, dass** der Stützring (152) und das Gehäuse (110) aus einem Teil bestehen und die Lippendichtung (156) eine einzige Lippe (159) beinhaltet, die so ausgelegt ist, dass sie eine Dichtung mit der nach Innen gerichteten ringförmigen Dichtungsoberfläche (166) des Dichtungsbandes (160) bildet.

8. Luftfilter (100) nach Anspruch 6, **dadurch gekennzeichnet, dass** die erste Lippe (157) und die zweite Lippe (159) nach innen geneigt sind in Bezug auf eine Achsrichtung des Dichtungsringes (150), und die erste Lippe (157) einen Winkel von zwischen 30° und 60° in Bezug auf die zweite nach innen gerichtete ringförmige Oberfläche (119) bildet und die zweite Lippe (159) einen Winkel von zwischen 30° und 60° in Bezug auf die nach innen gerichtete ringförmige Dichtungsoberfläche (166) bildet.

9. Luftfilter (100) nach einem der vorangehenden Ansprüche, **dadurch gekennzeichnet, dass** das ringförmige Dichtungsband (160) aus einem Kunstharz geformt ist.

10. Luftfilter (100) nach einem der vorangehenden Ansprüche **dadurch gekennzeichnet, dass** der Stützring (152) aus Kunstharz geformt ist.

11. Luftfilter (100) nach einem der vorangehenden Ansprüche, **dadurch gekennzeichnet, dass** die Lippendichtung (156) aus einem elastomerischen Material geformt ist.

12. Luftfilter (100) nach einem der vorangehenden Ansprüche, **dadurch gekennzeichnet, dass** die Lippendichtung (156) über den Stützring (152) gepresst ist.

## Claims

1. Air filter (100), including a filter housing (110) and a filter element (130), the filter housing (110) defining a filter seat chamber (120) with first inwardly directed annular surface (118) which has a first diameter and a first axial length, and a seal chamber with a second inwardly directed surface (119) which has a second diameter and a second axial length, the second diameter being smaller than the first diameter and the second axial lengths being shorter than the first axial length, the filter element (130) having an axially wound layer or bundled layers of filter media and featuring a first flow surface (132) at an inlet end and a second flow surface (134) at an outlet end, the filter element (130) having an outwardly directed circumferential surface (136), the filter element (130) being fit into the filter seat chamber (120) and an annular seal band (160) being attached to the outwardly directed circumferential surface (136) of the filter element (130), **characterized in that** the seal band (160) has an inwardly directed annular sealing surface (166) and that a sealing ring (150) is provided which includes a supporting ring (152) and a lip seal (156), the sealing ring (150) being designed such that it forms a sealing between the second inwardly directed surface (119) of the filter housing (110) and the inwardly directed annular sealing surface (166) of the seal band (160).

2. Air filter (100) according to claim 1, **characterized in that** the annular seal band (160) is designed such that it fits glidingly over the outwardly directed circumferential surface (136) of the filter element (130).

3. Air filter (100) according to claim 1 or 2, **characterized in that** the annular seal band (160) includes a plurality radially extending fixing pins (162) which are integrally molded to the inwardly directed circumferential surface (166).

4. Air filter (100) according to one of the above claims, **characterized in that** an annular gap (g) formed between the outwardly directed circumferential surface (136) of the filter element (130) and the inwardly directed surface (118) of the filter housing (110) is smaller than approx. 2% of a diameter of the filter element (130).

5. Air filter (100) according to one of the above claims, **characterized in that** the sealing ring (150) features a radial profile (2d) which is smaller than approx. 10% of a diameter of the filter element (130).

6. Air filter (100) according to one of the above claims, **characterized in that** the lip seal (156) includes a first lip (157) and a second lip (159), the first lip (157) being designed such that it forms a sealing with the second inwardly directed annular surface (119) of the filter housing (110) and that the second lip (159) is designed such that it forms a sealing with the inwardly directed annular sealing surface (166) of the seal band (160).

7. Air filter (100) according to one of the claims 1 to 5, **characterized in that** the supporting ring (152) and the housing (110) consist of one piece and that the lip seal (156) includes one lip (159) which is designed such that it forms a sealing with the inwardly directed annular sealing surface (166) of the seal band (160).

8. Air filter (100) according to claim 6, **characterized in that** the first lip (157) and the second lip (159) are inwardly inclined with regard to an axial direction of the sealing ring (150) and that the first lip (157) forms an angle between 30° and 60° with regard to the second inwardly directed annular surface (119) and that the second lip (159) forms an angle between 30° and 60° with regard to the inwardly directed annular sealing surface (166).

9. Air filter (100) according to one of the above claims, **characterized in that** the annular seal band (160) is formed of synthetic resin.

10. Air filter (100) according to one of the above claims, **characterized in that** the supporting ring (152) is formed of synthetic resin.

11. Air filter (100) according to one of the above claims, **characterized in that** the lip seal (156) is formed of elastomeric material.

12. Air filter (100) according to one of the above claims, **characterized in that** the lip seal (156) is pressed over the supporting ring (152).

## Revendications

1. Filtre à air (100), comprenant un boîtier de filtre (110) et un élément filtrant (130), le boîtier de filtre (110) limitant une chambre de réception du filtre (120) avec une première surface (118) annulaire orientée vers l'intérieur et faisant preuve d'un premier diamètre et d'une première longueur axiale et une chambre d'étanchéité avec une deuxième surface (119) orientée vers l'intérieur et faisant preuve d'un deuxième diamètre et d'une deuxième longueur axiale, le deuxième diamètre étant inférieur au premier diamètre et la deuxième longueur axiale étant plus courte que la première longueur axiale, l'élément filtrant (130) étant doté d'une couche enroulée en sens axial ou de couches concentrées de milieux filtrants et présentant une première surface de flux (132) à une extrémité d'entrée et une deuxième surface de flux (134) à une extrémité de sortie, l'élément filtrant (130) disposant d'une surface (136) périphérique orientée vers l'extérieur, l'élément filtrant (130) étant ajusté dans la chambre de réception du filtre (120) et une bande d'étanchéité (160) annulaire étant fixée sur la surface (136) périphérique orientée vers l'extérieur de l'élément filtrant (130), **caractérisé en ce que** la bande d'étanchéité (160) dispose d'une surface d'étanchéité (166) annulaire orientée vers l'intérieur et qu'une bague d'étanchéité (150) comprenant une bague d'appui (152) et un joint à lèvres (156) est prévue, la bague d'étanchéité (150) étant conçue de manière à ce qu'elle forme un joint entre la deuxième surface (119) orientée vers l'intérieur du boîtier de filtre (110) et la surface d'étanchéité (166) annulaire orientée vers l'intérieur de la bande d'étanchéité (160).

2. Filtre à air (100) selon la revendication 1, **caractérisé en ce que** la bande d'étanchéité (160) annulaire est conçue de manière à ce qu'elle s'insère de façon coulissante au-dessus de la surface (136) périphérique orientée vers l'extérieur de l'élément filtrant (130).

3. Filtre à air (100) selon la revendication 1 ou 2, **caractérisé en ce que** la bande d'étanchéité (160) annulaire comprend plusieurs broches de fixation (162) évoluant en sens radial qui sont formées sur la surface (166) périphérique orientée vers l'intérieur.

4. Filtre à air (100) selon l'une des revendications précédentes, **caractérisé en ce qu'**un interstice (g) annulaire formé entre la surface (136) périphérique orientée vers l'extérieur de l'élément filtrant (130) et la surface (118) orientée vers l'intérieur du boîtier de filtre (110) est plus petit qu'env. 2 % d'un diamètre de l'élément filtrant (130).

5. Filtre à air (100) selon l'une des revendications précédentes, **caractérisé en ce que** la bague d'étanchéité (150) présente un profil radial (2d) plus petit qu'env. 10 % d'un diamètre de l'élément filtrant (130).

6. Filtre à air (100) selon l'une des revendications précédentes, **caractérisé en ce que** le joint à lèvres (156) comprend une première lèvre (157) et une deuxième lèvre (159), la première lèvre (157) étant conçue de manière à ce qu'elle forme un joint avec la deuxième surface (119) annulaire orientée vers l'intérieur du boîtier de filtre (110) et la deuxième lèvre (159) étant conçue de manière à ce qu'elle forme un joint avec la surface d'étanchéité(166) annulaire orientée vers l'intérieur de la bande d'étanchéité (160).

7. Filtre à air (100) selon l'une des revendications 1 à 5, **caractérisé en ce que** la bague d'appui (152) et le boîtier (110) sont constitués d'un seul bloc et que le joint à lèvres (156) comprend une seule lèvre (159) conçue de manière à ce qu'elle forme un joint avec la surface d'étanchéité (166) annulaire orientée vers l'intérieur de la bande d'étanchéité (160).

8. Filtre à air (100) selon la revendication 6, **caractérisé en ce que** la première lèvre (157) et la deuxième lèvre (159) sont inclinées vers l'intérieur par rapport à un sens axial de la bague d'étanchéité (150), et que la première lèvre (157) forme un angle compris entre 30° et 60° par rapport à la deuxième surface (119) annulaire orientée vers l'intérieur et que la deuxième lèvre (159) forme un angle compris entre 30° et 60° par rapport à la surface d'étanchéité (166) annulaire orientée vers l'intérieur.

9. Filtre à air (100) selon l'une des revendications précédentes, **caractérisé en ce que** la bande d'étanchéité (160) annulaire est réalisée dans une résine synthétique.

10. Filtre à air (100) selon l'une des revendications précédentes, **caractérisé en ce que** la bague d'appui (152) est réalisée dans une résine synthétique.

11. Filtre à air (100) selon l'une des revendications précédentes, **caractérisé en ce que** le joint à lèvres (156) est réalisé dans un matériau élastomère.

12. Filtre à air (100) selon l'une des revendications précédentes, **caractérisé en ce que** le joint à lèvres (156) est pressé au-dessus de la bague d'appui (152).
